# EUROPEAN PATENT SPECIFICATION

(11) **EP 3 521 548 B1**
(45) Date of publication and mention of the grant of the patent: **14.10.2020**
(21) Application number: 19161953.5
(22) Date of filing: 22.05.2015
(51) Int. Cl.: E21B 10/14, E21B 10/20, E21B 10/62

(54) **HYBRID BIT WITH MECHANICALLY ATTACHED ROLLER CONE ELEMENTS**
HYBRIDMEISSEL MIT MECHANISCH BEFESTIGTEN ROLLENKEGELELEMENTEN
TRÉPAN HYBRIDE AVEC ÉLÉMENTS À CÔNES ROTATIFS FIXÉS MÉCANIQUEMENT

(30) Priority: 23.05.2014 US 201462002787 P
(43) Date of publication of application: 07.08.2019
(62) Divisional of application: 15729979.3
(73) Proprietor: Baker Hughes Holdings LLC, Houston, TX 77073 (US)
(72) Inventor: SCHRODER, Jon, The Woodlands, TX Texas 77382 (US)
(74) Representative: BRP Renaud & Partner mbB Rechtsanwälte Patentanwälte Steuerberater

(56) References cited:
- WO-A1-2010/127382
- WO-A2-2009/135119
- US-A- 3 760 894
- US-A- 5 199 516
- US-A1- 2011 085 877
- US-A1- 2012 111 638

## Description

### BACKGROUND OF THE INVENTION

Field of the Invention. The inventions disclosed and taught herein relate generally to hybrid drill bits having at least one fixed blade with cutter elements and at least one rolling cutter assembly; and more specifically related to a hybrid drill bit having a mechanically fastened rolling cutter assembly.

### Description of the Related Art.

Rotary earth boring bits useful for oil and gas exploration and production have evolved considerably since the bi-cone bit developed by Howard Hughes, which had two rotatable cone-shaped cutting assemblies. Today, there are rotary bits with fixed or non-rotating blades with polycrystalline diamond cutters (PDC) mounted thereon. There are also hybrid bits combining fixed blade cutting elements and rotating cutting elements. Most, but not all hybrid bits are modular in construction, in that the rotatable or rolling cutter elements are separate components coupled to the bit body by welding or other type of fastening.

The inventions disclosed and taught herein are directed to an improved modular hybrid bit having at least one rolling cutter assembly mechanically fastened to the bit body.

The present invention is characterised over WO 2009/135119, which discloses an earth-boring bit comprising a fixed blade extending axially downwardly from the bit body and a bit leg retained in a slot by bolts extending through apertures in the leg.

US 2011/085877 discloses a downhole tool comprising a cutter rotatably mounted to a journal, wherein the journal is fastened to a downhole tool frame with a fastener. The fastener is engaged by an insert and retainer that weldments may extend between.

### BRIEF SUMMARY OF THE INVENTION

The present invention provides a hybrid drill bit as claimed in claim 1. As a brief summary of one of the many embodiments of the present inventions, a hybrid drill bit may comprise a body having at least one blade, each blade comprising a plurality of earth formation cutting elements; at least one rolling cutter assembly pocket formed into the body and comprising a first torque-reacting structure, wherein the pocket is disposed between adjacent blades; at least one rolling cutter assembly comprising a head onto which a cutter element is rotatably coupled; the head comprising a second torque-reacting structure configured to operatively engage the first torque-reacting structure, and a plurality of mechanical fastener openings; a plurality of mechanical fasteners fabricated from high-strength, high fracture toughness, corrosion resistant metal alloy configured to securely and removably couple the at least one rolling cutter assembly to the pocket; a locking structure formed on a portion of at least one fastener and configured to provide an interference fit between the locking structure and an associated fastener opening in the head; a plurality of locking caps each configured to engage an exposed portion of a fastener and prevent relative rotation between the fastener and the cap; and a plurality of weldments engaging at least a portion of each locking cap and configured to prevent dislodgment of the caps from the fastener and to prevent relative rotation between the cap and the body, wherein the plurality of weldments comprise a first series of weldments laid down along the top of the caps and between adjacent caps to join each adjacent cap.

### BRIEF DESCRIPTION OF THE SEVERAL VIEWS OF THE DRAWINGS

The following figures are included to further demonstrate and teach certain aspects of the present invention. The invention may be better understood by reference to one or more of these figures in combination with the detailed description of specific embodiments presented herein.
FIG. 1 illustrates in exploded view one of many possible embodiments of a modular hybrid drill bit with a rolling cutter assembly mechanically fastened to the bit body.
FIG. 2 illustrates the hybrid bit of FIG.1 in an assembled view.
FIG. 3 illustrates one of many possible examples of a rolling cutter head in accordance with embodiments of the present invention.
FIG. 4 illustrates one of many possible examples of a mechanical fastener system and locking cap in accordance with embodiments of the present invention.
FIG. 5 illustrates a deformed fastener opening in a rolling cutter head.

I have created a modular, hybrid drill bit comprising a single or a plurality of fixed blades and at least one rolling cutter assembly, in which the rolling cutter assembly is secured to the bit body with mechanical fasteners. The rolling cutter assembly may be configured to mate with a pocket in the bit body and to engage anti-rotation or anti- movement structures, such as a tongue and groove system. Further, shims may be used between the rolling cutter assembly and the pocket or bit body to adjust the radial projection of the rolling cutter assembly and/or the axial projection of the rolling cutter assembly.

In a preferred embodiment, the mechanical fasteners comprise threaded studs fabricated from high-strength, high-toughness, corrosion resistant metal alloy and extend radially outwardly from the pocket or bit body on to which the rolling cutter assembly is placed. Threaded nuts may engage the exposed stud threads and be tightened to clamp the rolling cutter assembly into the pocket. One or more of the studs may have a locking structure, such as an interference fit, that will elastically or plastically deform the fastener opening in the rolling cutter assembly to secure the assembly in axial position. The nuts may be weld in place to prevent loosening of the fasteners. Alternately and preferably, locking caps configured to engage the nut landings may be placed over the exposed nuts and welded together and to the bit body or alternately to a locking plate held down by the nuts eliminating welding to a head or bit body, to prevent loosening of the fasteners.

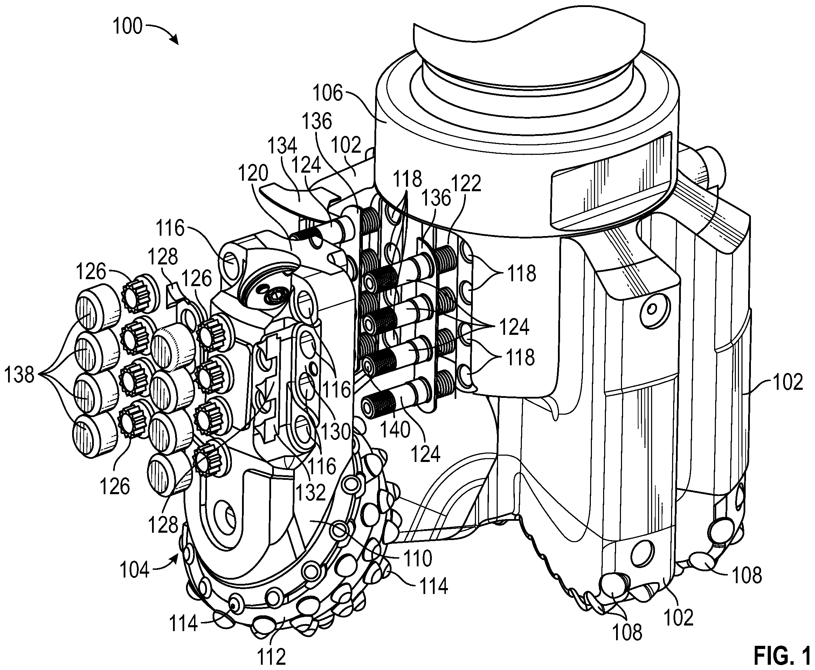

Turning now to FIG 1 , illustrated is one of many possible embodiments of a hybrid drill bit 100 comprising a plurality of fixed cutter blades 102 and at least one rolling cutter assembly 104 mechanically and removably fastened to the bit body 106. As illustrated in FIG. 1 the fixed cutter blades 102 may be, but are not required to be, fabricated integrally with the drill bit body 106. The rolling cutter assembly 104 is illustrated as a separate component that is mechanically and removably attached to a portion of the drill bit body 106, preferably between fixed cutter blades 102.

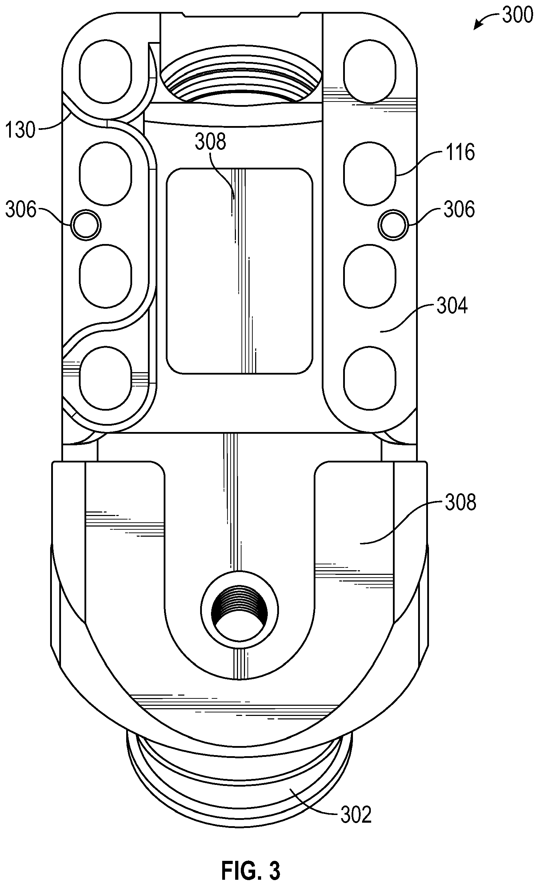

The fixed cutter blades 102 each have a plurality of cutting elements 108, such as, without limitation, PDC cutting elements affixed thereto in known manner and location. The rolling cutter 104 comprises a body or head 110 having a spindle 302 (FIG. 3) and a rolling cone 112 to which a plurality of cutting elements 114 are affixed in known manner and location.

The rolling cutter head 110 has a plurality of mechanical fastener openings 116 substantially corresponding with fastener openings 118 in the bit body. The head 110 preferably, but not necessarily, comprises anti-movement element 120 or tongue that engages a mating portion 122 of the body such as a groove or head pocket in the bit body 106.

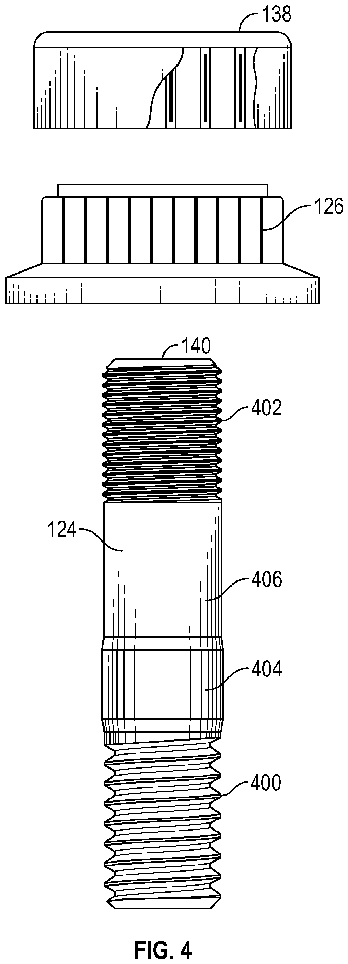

As illustrated in FIG. 1, the rolling cutter head 110 may be mechanically coupled to the body 106 through use of a plurality of threaded fasteners 124. In a preferred embodiment, the threaded fasteners 124 comprise threaded studs having threaded portions at each end. The rolling cutter head 110 will be secured to the bit body 106 with nuts 126 that matingly engage with the threaded studs. Alternately, threaded bolts having integral heads may be used. The preferred fasteners are discussed in more detail with respect to FIG. 4

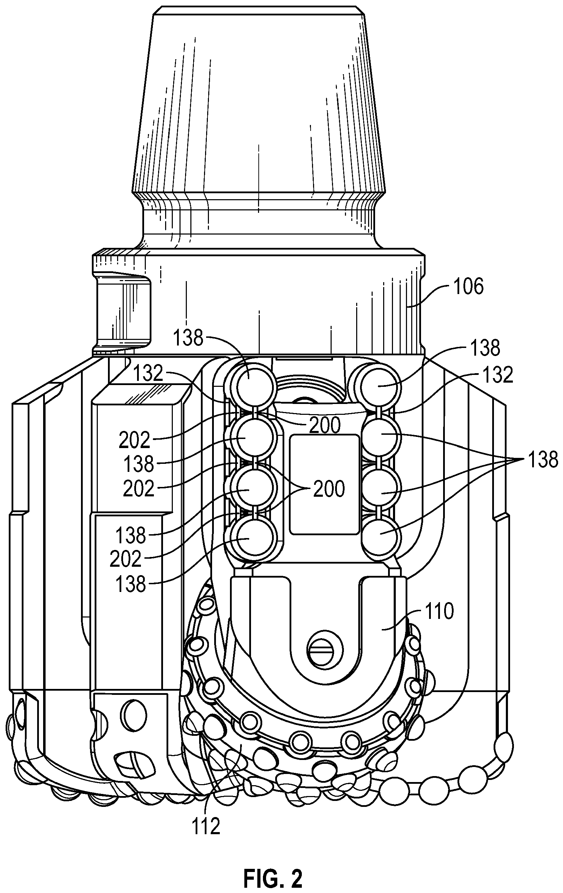

Also illustrated in FIG. 1 are optional locking plates 128. As illustrated, locking plate 128 engages a locking plate recess 130 in the head 110. The locking plate 128 illustrated in in FIG. 1 comprises three pillars 132, which, as illustrated in FIG. 2, are interposed between the nuts 126. As discussed with respect to FIG. 3, alternate locking plate configurations are contemplated.

The fastener openings in the head 116 and the corresponding openings in the bit body 118 may be, and preferably are, aligned along radial lines to a real or imaginary center of the body 106. Alternately, the fastener openings 116, 118 may be aligned along non-radial chords into the body.

It will be appreciated that at least because of the variations in component sizes caused by manufacturing tolerances in both the bit body 106 and in the rolling cutter head 110, hybrid bit 100 may utilize spacers or shims to adjust the precise location of the rolling cutter head 110 / rolling cutter cone 112 relative to the bit body 106, and most especially relative to the cutting element exposure. For example, as illustrated in FIG. 2, one or more shims 134 may be placed between a top surface of the rolling cutter head 110 and a corresponding part in the bit body 106, as shown. It will be appreciated that one or more shims 134 in this location will displace the rolling cutter head 110 in axial direction allowing adjustment of the exposure of the rolling cutting Elements 114. Similarly, one or more shims 136 may be placed between the rolling cutter head 110 and the bit body 106 to space the head 110 away from the body 106 in a radial direction. Because of this adjustability, it is preferred that the fastener openings 116, 118 be oriented along radial lines as well.

As discussed in more detail with respect to FIG. 3, axial adjustment of the rolling cutter assembly 104 requires that the fastener openings 116 be elongated a sufficient amount to allow for axial adjustment.

As illustrated in FIG. 2, the radial shims 136 may be held in place by the mechanical fasteners 124, 126. The axial shims 134, however, may be susceptible to movement or dislodging from their location between the rolling cutter head 110 and the bit body 106. It is contemplated that several different shim 134 locking mechanisms may be employed to hold the axial shims in place. For example, a recess may be formed in the cutting head 110 surface to engage a protrusion on the axial shim 134 to prevent the axial shim 134 from dislodging from the drill bit 100.

Lastly, as illustrated in FIG. 1 , this particular embodiment 100 utilizes locking caps 138 to prevent the fastener nuts 126 from loosening, as will be discussed below.

Turning to FIG. 2, the bit 100 of FIG. 1 is shown in assembled conditioned. The mechanical fasteners 124, 126 have been tightened to the desired tension, and locking caps 138 have been installed on an exposed portion of the fasteners 116, such as a nut or a bolt head. To prevent the fasteners 116 from loosening during use of bit 100, a first series of tack welds 200 is laid down along the top of the caps and between adjacent caps to join each adjacent cap. Additionally, a series of tack welds 202 may be laid down securing the caps 138 to, preferably, the locking plates 128, such as at each pillar 132, or, alternately, to the head 110. It will be appreciated that while welds 202 secure the caps to the bit 100 and prevent loosening of fastener 116, such as nuts 126, welds 200 are useful to keep the caps 138 aligned prior to placing weld 202.

While eight fasteners are shown in the embodiments described in FIGs. 1 and 2, it will be appreciated that other numbers of fasteners may be used, including one fastener per rolling cutter assembly. It will be appreciated that the number of fasteners may vary from one to multiple depending on the configuration of the rolling cutter element and its material properties, the material properties of the body, the material properties of the fastener(s) used. For the embodiments shown in FIGs. 1 and 2, only four fasteners are likely needed; specifically the two fasteners on either side at the top and bottom. The two middle fasteners on each side are considered back-up fasteners in case of failure of one or more of the primary fasteners. It will be appreciated that spacing the primary fasteners as described maximizes the anti-rotation properties of rolling cutter assembly.

FIG. 3 illustrates a rolling cutter head 300 suitable for use with the inventions disclosed herein. Head 300 is similar to the head 110 described in FIG. 1, and shows roller cone spindle 302 not visible in FIG. 1. Head 300 is shown with the recess 130 configured to receive locking plate 128, as shown in Fig. 1. Alternately, as shown in FIG. 3, the head 300 need not have a recess to utilize a locking plate, and the surface 304 may be substantially flat, for example. To aid in removal of the head 300 or cutter assembly 104 from the bit body 106 after use (such as for repair), head 300 is illustrated with removal aid 306, which may be threaded holes to receive a tool for pulling the head off of the body 106. Also illustrated in FIG. 3 are areas of hard-facing 308 that may be applied to the roller cutter head 300 preferably prior to assembly of the head 300 and prior to mating of the rolling cutter assembly on the bit body 106.

FIG. 3 also shows that the fastener holes 116 may be elongated circular holes rather than substantially circular holes. It will be appreciated that if axial adjustment of the rolling cutter assembly 104, 300 is desired, then fastener holes 116 may need to be elongated to allow for the axial movement of the assembly 104 relative to the body 106. Conversely, if no axial adjustment of the rolling cutter assembly 104 is desired, the fastener openings 116 may be circular or substantially circular and configured to mate with the mechanical fasteners with a sliding fit or location fit, as those terms are understood in the art. For example, if the desired amount of axial displacement or adjustment is about 1.78 mm (0.070 inch), then the long axis of the elongated opening will need to be equal to or greater than 1.78 mm (0.070 inch) more than the diameter of a corresponding circular hole.

Illustrated in FIG. 4 is an example of one of the many types of mechanical fastener systems that can be used with the present inventions. The presently preferred mechanical fastener system comprises a stud 124 having threaded portions 400 and 402 at each end and an associated nut 126. In the particular embodiment described in this disclosure, this fastener stud 124 may have a nominal diameter of 11.1 mm (7/16 inch) with an overall length of about 50.8 mm (2 inches). As illustrated in FIG. 4, threaded portion 400 comprises a course series thread, such as a 11.1 mm diameter, 14 threads per 25.4 mm (7/16 inch - 14 thread). The threaded portion 400 of the stud 124 is configured to mate with corresponding threads in threaded receptacles 118. The other end of the stud 124 may comprise a fine series thread such as 11.1 mm diameter, 20 threads per 25.4 mm (7/16 inch - 20). One reason for having a fine series thread on one end of the stud 124 is because the material properties of the bit body 106 likely will be substantially less than the material properties of this preferred mechanical fastener system. Use of a fine thread 402 at the distal end of the stud to engage the nut 126 serves to reduce the possibility of overloading and stripping the course series threads 400 from the bit body.

It is preferred that the mechanical fasteners, for example the threaded studs 124 and nuts 126 be fabricated from a corrosion resistant, high-strength metal alloy material having a high level of material toughness. For example, it is presently preferred that the mechanical fasteners be fabricated from a Nickel-bearing, heat-treatable alloy, such as Inconel (RTM), having a tensile strength of at least 179 GPa (260,000 psi). Mechanical fasteners of this type may be obtained from various commercial sources, including, but not limited to Automotive Racing Products, Inc. Studs 124 and nuts 126 made by ARP from its Custom Age 625+ (RTM) material have been used for prototypes of hybrid bit 100. It is preferred, but not required, that the studs 124 and nuts126 be fabricated from the same material.

To the extent a locking plate 128 is used with a particular hybrid bit embodiment, the material for the locking plate and for the locking caps 138 need not be, and preferably are not, made from the same material as the fasteners. In a preferred embodiment, the locking plate 128 material and the locking cap 138 material may be a conventional steel alloy, such as AISI 8620, other metal alloy that provides ease of welding. Since the locking plate 128 and the locking cap are not significant loadbearing components, strength and load corrosion resistance is not as important as it is for the mechanical fasteners, which bear significant static and dynamic loads.

It will also be appreciated that the clamping force provided by the mechanical fasteners is an issue of design depending on the size of the bit 100, the environment anticipated and the materials from which the bit 100 are fabricated. For the embodiments illustrated in this application using eight 11.1 mm (7/16 inch) nominal mechanical fasteners for each rolling cutter assembly 104, it is desired to preload each fastener to about 145 MPa (21,000 pounds), or about 89% of its 0.02% offset yield load. Those of skill will appreciate it that determining the amount of fastener preload is typically done by controlling the amount of torque imposed on the nut 126. However, as is known, the relationship between torque and preload is not necessarily linear and is affected by a variety of factors, not the least of which is friction between the nut 126 and stud 124 threads. For example, it is been found that while 129 Nm (95 foot-pounds) of torque applied to the nut can be calculated to generate 7,940 kg (17,500 pounds) of preload, it has been found that up to about 163 Nm (120 foot-pounds) of torque was needed to achieve the same preload. This variation in calculated torque versus required torque was attributed to the friction between stud and the nut both being fabricated from the same high-strength, high- toughness material.

As illustrated in FIG. 1, the stud 126 may also comprise a recessed hex head 140 or other type of drive system for installing and tightening (e.g., torqueing) the stud into the bit body 106 at threaded receptacles 118.

Also shown in FIG. 4 is an upset region 404 approximately a 35.6 mm (1/4 inch) in length and having a diameter between about 0.432 mm and 0.483 mm (0.017 and 0.019 inch) greater than the main body 406 of the fastener 124. This upset area 404 is configured to provide an interference type fit with the fastener openings 116 in the rolling cutter head 110. It will be appreciated that once the appropriate axial shims 134 are put in place, if needed, and the rolling cutter assembly is put into position on the studs 124, tightening down the nuts 126 causes mechanical deformation, either plastic or elastic, thereby locking the rolling cutter assembly 104 head in axial position on the bit body 106. If the stud 124 material is stronger (e.g., harder) than the material from which the head 110 is made, the softer material will deform substantially more than the harder upset 404 region.

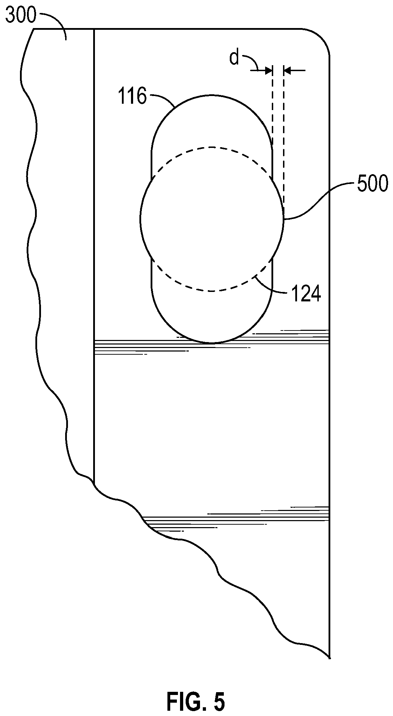

FIG. 5. is an illustration of what a fastener opening 116 may look like after plastic deformation 500 caused by the upset region 404 on stud 124. The deformation on one side of the opening 116 is labeled "d" in FIG. 5. It can be appreciated from this illustration this interference fit and resulting deformation functions to help secure the rolling cutter assembly 104 in axial position on the bit body 106.

It will be appreciated that there are alternate embodiments of this upset region that may be used to advantage with the inventions disclosed herein. For example, and without limitation, single or multiple protuberances such as diamond shaped points may be used instead of the circumferential upset 404 illustrated in FIG. 4. Alternately, serrated ridges along a portion of stud 124 may be used to help secure the rolling cutter assembly 104 in axial position.

Now having benefit of this disclosure, it will be appreciated that a hybrid bit according to the present invention may be assembled as follows. If studs are used as the mechanical fasteners, the studs are placed in the threaded receptacles in the bit body and torqued to the desired level such as, for example, 102 Nm (75 foot-pounds). It will be appreciated that the appropriate torque level will depend on the fastener material, the bit body material and the clamping force necessary to achieve the desired stability of the rolling cutter assembly.

Radial and axial shims, if needed or desired, may be placed in position on the bit body or the rolling cutter assembly, as desired. The rolling cutter head may be placed in the desired axial and radial position the bit body pocket so that the anti-rotation structures operatively engage each other. If studs are use, the rolling cutter assembly is slid down the studs. If bolts are used, the bolts are inserted into the fastener openings and screwed into the fastener receptacles in the bit body. If a fastener- locking plate is used, they are placed over the studs, or placed in position before the bolts are run home.

Nuts are screwed on the studs, if used, and each nut or bolt is torqued to the desired preload for each mechanical fastener. Once the fasteners are torqued to the appropriate level, locking caps may be placed over on the exposed position of each fastener, such as nut or bolt head. A weld, such as a tack weld, is laid-down along the top of the caps and between the top cap surfaces. This weld may function to prevent the caps, and therefore the nuts or bolt heads from loosening by rotating. Also, this weld may be beneficial in preventing the caps from canting when a side cap weld is laid down. To prevent the caps from dislodging from the bit, a weld, such as a tack weld, may be placed between the sides of each cap and between the material that contacts the underside of the nut or bolt head. It will be appreciated that when a locking plate is used, and it is made from the same material as the locking cap, a side weld may be easily placed in these regions. If a lock plate is not used, the side weld can still lock the caps to each other and to the rolling cutter head.

If the mechanically fastened rolling cutter assembly needs to be removed, such as for repair of the bit, the one or more locking cap welds can be ground off and the locking caps removed. The fasteners can be loosened and removed. To ease dismantling of the rolling cutter assembly from the bit body, a pulling tool may engage one or more threaded receptacles in the rolling cutter assembly and used to pull the rolling cutter assembly past the interference fit caused by the upset portion of the mechanical fastener.

## Claims

1. A hybrid drill bit (100) comprising:
at least one fixed blade (102) having a plurality of cutter elements (108);
a rolling cutter assembly pocket formed into a hybrid bit body (106);
at least one rolling cutter assembly (104) comprising a head (110) onto which a cutter element (114) is rotatably coupled; and
a plurality of mechanical fasteners (124) configured to securely and removably couple the at least one rolling cutter assembly (104) to the pocket;
wherein the head (110) comprises a plurality of mechanical fastener openings (116);
and wherein the bit body (106) comprises a plurality of mechanical fastener receptacles (118) that correspond with the plurality of mechanical fastener openings (116) of the head (110);
the hybrid drill bit (100) **characterised by** comprising:
a plurality of locking caps (138) each configured to engage an exposed portion of a fastener (124) and prevent relative rotation between the fastener (124) and the rolling cutter assembly (104); and
a plurality of weldments (200, 202) engaging at least a portion of each locking cap (138) and configured to prevent dislodgment of the caps (138) from the fastener (124) and to prevent relative rotation between the cap (138) and the body (106), wherein the plurality of weldments (200, 202) comprise a first series of weldments (200) laid down along the top of the caps (138) and between adjacent caps (138) to join each adjacent cap (138).

2. The hybrid drill bit (100) of claim 1, wherein the plurality of weldments (200, 202) comprise a second series of weldments (202) laid down securing the caps (138) to the head (110).

3. The hybrid drill bit (100) of claim 1, further comprising at least one locking plate (128), wherein:
each of the least one locking plates (128) is configured to engage a locking plate recess (130) in the head (110); and
the plurality of weldments (200, 202) comprise a second series of weldments (202) laid down securing the caps (138) to the at least one locking plate (128).

4. The hybrid drill bit (100) of any of claims 1-3, further comprising one or more shims (134; 136) between the rolling cutter assembly (104) and the pocket or bit body (106) to adjust the radial projection of the rolling cutter assembly (104) and/or the axial projection of the rolling cutter assembly (104).

5. The hybrid drill bit (100) of claim 4, comprising one or more shims (134) between a top surface of the head (110) and a corresponding part in the bit body (106).

6. The hybrid drill bit (100) of any of claims 1-5, wherein the fastener openings (116) are elongated to allow for axial adjustment of the rolling cutter assembly (104) relative to the bit body (106).

7. The hybrid drill bit (100) of any of claims 1-6, further comprising a torque reacting structure disposed between the rolling cutter assembly (104) and the bit body (106).

8. The hybrid drill bit (100) of claim 7, wherein the torque reacting structure comprises a tongue and groove system.

9. The hybrid drill bit (100) of any of claims 1-8, wherein a portion of at least one mechanical fastener (124) is configured for an interference fit with a fastener opening (116).

10. The hybrid drill bit (100) of claim 9, wherein the interference fit secures the head (110) in an axial location.

## Patentansprüche

1. Hybrid-Bohrmeißel (100), umfassend:
mindestens eine feststehende Klinge (102), die eine Vielzahl von Schneidelementen (108) aufweist;
eine Rollmesseranordnungsaussparung, die in einem Hybrid-Meißelkörper (106) ausgebildet ist;
mindestens eine Rollmesseranordnung (104), die einen Kopf (110) umfasst, an den ein Schneidelement (114) drehbar gekoppelt ist; und
eine Vielzahl von mechanischen Befestigungselementen (124), die konfiguriert sind, um die mindestens eine Rollmesseranordnung (104) sicher und entfernbar mit der Aussparung zu koppeln;
wobei der Kopf (110) eine Vielzahl von mechanischen Befestigungsöffnungen (116) umfasst;
und wobei der Meißelkörper (106) eine Vielzahl von mechanischen Befestigungsaufnahmen (118) umfasst, die der Vielzahl von mechanischen Befestigungsöffnungen (116) des Kopfes (110) entsprechen;
wobei der Hybrid-Bohrmeißel (100) **dadurch gekennzeichnet ist, dass** er umfasst:
eine Vielzahl von Arretierkappen (138), die jeweils konfiguriert sind, um mit einem freiliegenden Abschnitt eines Befestigungselements (124) in Eingriff zu gelangen und eine relative Drehung zwischen dem Befestigungselement (124) und der Rollmesseranordnung (104) zu verhindern; und
eine Vielzahl von Schweißungen (200, 202), die mit zumindest einem Abschnitt jeder Arretierkappe (138) in Eingriff stehen und konfiguriert sind, um Entfernung der Kappen (138) von dem Befestigungselement (124) zu verhindern und eine relative Drehung zwischen der Kappe (138) und dem Körper (106) zu verhindern, wobei die Vielzahl von Schweißungen (200, 202) eine erste Reihe von Schweißungen (200) umfasst, die entlang der Oberseite der Kappen (138) und zwischen benachbarten Kappen (138) zum Verbinden der jeweils benachbarten Kappe (138) angebracht wurden.

2. Hybrid-Bohrmeißel (100) nach Anspruch 1, wobei die Vielzahl von Schweißungen (200, 202) eine zweite Reihe von Schweißungen (202) umfasst, die die Kappen (138) an dem Kopf (110) sichernd angebracht wurden.

3. Hybrid-Bohrmeißel (100) nach Anspruch 1, ferner umfassend mindestens eine Arretierplatte (128), wobei:
jede der mindestens einen Arretierplatte (128) konfiguriert ist, um in eine Arretierplattenausnehmung (130) in dem Kopf (110) einzugreifen; und
die Vielzahl von Schweißungen (200, 202) eine zweite Reihe von Schweißungen (202) umfasst, die die Kappen (138) an der mindestens einen Arretierplatte (128) sichernd angebracht wurden.

4. Hybrid-Bohrmeißel (100) nach einem der Ansprüche 1 bis 3, ferner umfassend eine oder mehr Beilagen (134; 136) zwischen der Rollmesseranordnung (104) und der Aussparung oder dem Meißelkörper (106), um den radialen Vorsprung der Rollmesseranordnung (104) und/oder den axialen Vorsprung der Rollmesseranordnung (104) einzustellen.

5. Hybrid-Bohrmeißel (100) nach Anspruch 4, umfassend eine oder mehrere Beilagen (134) zwischen einer Oberfläche des Kopfes (110) und einem entsprechenden Teil im Meißelkörper (106).

6. Hybrid-Bohrmeißel (100) nach einem der Ansprüche 1 bis 5, wobei die Befestigungsöffnungen (116) länglich sind, um eine axiale Einstellung der Rollmesseranordnung (104) relativ zu dem Meißelkörper (106) zu ermöglichen.

7. Hybrid-Bohrmeißel (100) nach einem der Ansprüche 1 bis 6, ferner umfassend eine Drehmomentreaktionsstruktur, die zwischen der Rollmesseranordnung (104) und dem Meißelkörper (106) angeordnet ist.

8. Hybrid-Bohrmeißel (100) nach Anspruch 7, wobei die Drehmomentreaktionsstruktur ein Zungen-Nut-System umfasst.

9. Hybrid-Bohrmeißel (100) nach einem der Ansprüche 1 bis 8, wobei ein Abschnitt von mindestens einem mechanischen Befestigungselement (124) für eine Presspassung mit einer Befestigungsöffnung (116) konfiguriert ist.

10. Hybrid-Bohrmeißel (100) nach Anspruch 9, wobei die Presspassung den Kopf (110) in einer axialen Position sichert.

## Revendications

1. Trépan hybride (100) comprenant :
au moins une lame fixe (102) ayant une pluralité d'éléments de coupe (108) ;
une poche d'ensemble de coupe à mollettes formée dans un corps de trépan (106) hybride ;
au moins un ensemble de coupe à molettes (104) comprenant une tête (110) sur laquelle un élément de coupe (114) est couplé de manière rotative ; et
une pluralité de fixations mécaniques (124) configurées pour coupler solidement et de façon amovible l'au moins un ensemble de coupe à molettes (104) à la poche ;
dans lequel la tête (110) comprend une pluralité d'ouvertures de fixations mécaniques (116) ;
et dans lequel le corps de trépan (106) comprend une pluralité de réceptacles de fixations mécaniques (118) qui correspondent à la pluralité d'ouvertures de fixations mécaniques (116) de la tête (110) ;
le trépan hybride (100) étant **caractérisé en ce qu'**il comprend :
une pluralité de coiffes de verrouillage (138) configurées chacune pour venir en prise avec une partie exposée d'une fixation (124) et empêcher une rotation relative entre la fixation (124) et l'ensemble de coupe à mollettes (104) ; et
une pluralité de soudures (200, 202) venant en prise avec au moins une partie de chaque coiffe de verrouillage (138) et configurées pour empêcher le délogement des coiffes (138) de la fixation (124) et pour empêcher la rotation relative entre la coiffe (138) et le corps (106), dans lequel la pluralité de soudures (200, 202) comprennent une première série de soudures (200) disposées le long du sommet des coiffes (138) et entre les coiffes adjacentes (138) pour joindre chaque coiffe adjacente (138).

2. Trépan hybride (100) selon la revendication 1, dans lequel la pluralité de soudures (200, 202) comprennent une deuxième série de soudures (202) disposées fixant les coiffes (138) à la tête (110).

3. Trépan hybride (100) selon la revendication 1, comprenant en outre au moins une plaque de verrouillage (128), dans lequel :
chacune de l'au moins une plaque de verrouillage (128) est configurée pour venir en prise avec un évidement de plaque de verrouillage (130) dans la tête (110) ; et
la pluralité de soudures (200, 202) comprennent une deuxième série de soudures (202) disposées fixant les coiffes (138) à l'au moins une plaque de verrouillage (128).

4. Trépan hybride (100) selon l'une quelconque des revendications 1 à 3, comprenant en outre une ou plusieurs cales (134 ; 136) entre l'ensemble de coupe à mollettes (104) et la poche ou le corps de trépan (106) pour ajuster la projection radiale de l'ensemble de coupe à mollettes (104) et/ou la projection axiale de l'ensemble de coupe à mollettes (104).

5. Trépan hybride (100) selon la revendication 4, comprenant une ou plusieurs cales (134) entre une surface supérieure de la tête (110) et une partie correspondante dans le corps de trépan (106).

6. Trépan hybride (100) selon l'une quelconque des revendications 1 à 5, dans lequel les ouvertures des fixations (116) sont allongées pour permettre un ajustement axial de l'ensemble de coupe à mollettes (104) par rapport au corps de trépan (106).

7. Trépan hybride (100) selon l'une quelconque des revendications 1 à 6, comprenant en outre une structure à réaction de couple disposée entre l'ensemble de coupe à mollettes (104) et le corps de trépan (106).

8. Trépan hybride (100) selon la revendication 7, dans lequel la structure à réaction de couple comprend un système à rainure et languette.

9. Trépan hybride (100) selon l'une quelconque des revendications 1 à 8, dans lequel une partie d'au moins une fixation mécanique (124) est configurée pour un ajustement serré avec une ouverture de fixation (116).

10. Trépan hybride (100) selon la revendication 9, dans lequel l'ajustement serré fixe la tête (110) dans un emplacement axial.
